# EUROPEAN PATENT APPLICATION

(11) **EP 4 755 787 A1**
(43) Date of publication of application: **10.06.2026**
(21) Application number: 25199348.1
(22) Date of filing: 01.09.2025
(51) Int. Cl.: B63H 21/17, B63H 25/02, B63H 25/04

(54) **BOAT CONTROL SYSTEM, BOAT CONTROL METHOD AND BOAT**

(30) Priority: 06.12.2024 JP 2024212981
(71) Applicant: Yamaha Hatsudoki Kabushiki Kaisha, Iwata-shi, Shizuoka 438-8501 (JP)
(72) Inventor: Anai, Masato, Iwata-shi, Shizuoka, 4388501 (JP)
(74) Representative: Grünecker Patent- und Rechtsanwälte PartG mbB

(57) **Abstract**

A boat control system controls a boat. The boat control system includes a boat propulsion device and an operation device. The boat propulsion device includes an electric motor and a first controller that controls the drive of the electric motor. The operation device accepts operations. The operation device outputs an operation signal in response to the operation. The first controller switches between a first steering mode in which the first controller controls the drive of the electric motor based on the operation signal and a second steering mode in which the first controller controls the drive of the electric motor based on an automatic control signal to automatically direct the boat to a destination point.

## Description

The present invention relates to a boat control system, a boat control method and a boat.

Known boat control systems are equipped with an outboard motor and a remote control lever. The outboard motor includes an engine that generates power and an engine ECU that controls the engine. The boat control system also has a remote control ECU. In the control mode for boat steering with the operation of the remote control lever, the remote control ECU gives the engine ECU a propulsion command in response to the operation position signal generated by the remote control unit. In the control mode for boat steering without the operation of the remote control lever (e.g., automatic steering), the remote control ECU sends the propulsion command generated by a main controller to the engine ECU (see JP 2024-068486 A).

It is the object of the present invention to provide a boat control system, a boat control method and a boat wherein simplifying of the configuration of the boat control system, the boat control method and the boat can be achieved.

According to the present invention said object is solved by a boat control system having the features of independent claim 1, a boat control method having the features of independent claim 14 or a boat according to claim 13. Preferred embodiments are laid down in the dependent claim.

The technology disclosed herein can be implemented in the following aspects.
(1) A boat control system disclosed herein controls a boat. The boat control system includes a boat propulsion device and an operation device. The boat propulsion device includes an electric motor and a first controller that controls the drive of the electric motor. The operation device accepts operations. The operation device outputs operation signals in response to the operations. The first controller switches between a first steering mode in which the first controller controls the drive of the electric motor based on the operation signal and a second steering mode in which the first controller controls the drive of the electric motor based on an automatic control signal to automatically direct the boat to a destination point. This boat control system can change whether the electric motor is controlled by an operation signal or an automatic control signal by switching the mode of the first controller, which simplifies the configuration of the boat control system.
(2) In the above boat control system, the first controller may receive information on the current point and the destination point of the boat and generate the automatic control signal. According to this configuration, the first controller can generate the automatic control signal, which simplifies the configuration of the boat control system.
(3) In the above boat control system, the automatic control signal may include a throttle request value, and the first controller may control the rotation speed of the electric motor based on the throttle request value. According to this configuration, the first controller can generate the automatic control signal, which simplifies the configuration of the boat control system.
(4) In the above boat control system, when the first controller switches from the first steering mode to the second steering mode, the first controller may set the throttle request value to the smaller of the first value, which is the throttle request value immediately before the switch from the first steering mode to the second steering mode, and the second value, which is the throttle request value predetermined for use in the second steering mode. According to this configuration, the first controller can generate the automatic control signal, which simplifies the configuration of the boat control system.
(5) In the above boat control system, the first controller may set the throttle request value to 0 when the boat reaches the destination point. According to this configuration, the first controller can generate the automatic control signal, which simplifies the configuration of the boat control system.
(6) In the above boat control system, the automatic control signal may include a shift request value, and the first controller may control the shift of the electric motor based on the shift request value. According to this configuration, the first controller can generate the automatic control signal, which simplifies the configuration of the boat control system.
(7) In the above boat control system, the first controller may set the shift request value to neutral when the boat reaches the destination point. According to this configuration, the first controller can generate the automatic control signal, which simplifies the configuration of the boat control system.
(8) In the above boat control system, the boat control system may further include a second controller that controls the overall operation in the boat, and the second controller may send a signal to the first controller requesting switching from the first steering mode to the second steering mode. This boat control system can change whether the electric motor is controlled by the operation signal or the automatic control signal by switching the mode of the first controller, which simplifies the configuration of the boat control system.
(9) In the above boat control system, in the first steering mode, the first controller may receive the operation signal output from the operation device via the second controller. This boat control system can change whether the electric motor is controlled by the operation signal or the automatic control signal by switching the mode of the first controller, which simplifies the configuration of the boat control system.
(10) In the above boat control system, the first controller and the second controller may be connected to each other by CAN communication. This configuration can change whether the electric motor is controlled by the operation signal or the automatic control signal by switching the mode of the first controller, which simplifies the configuration of the boat control system.
(11) A boat disclosed herein is equipped with a boat body and the boat control system described in any one of (1) through (10) above. This boat can change whether the electric motor is controlled by the operation signal or the automatic control signal by switching the mode of the first controller, which simplifies the configuration of the boat control system.
(12) Another boat control system disclosed herein controls a boat. The boat control system includes a boat propulsion device. The boat propulsion device includes an electric motor and a first controller that controls the drive of the electric motor. The first controller generates an automatic control signal to automatically direct the boat to a destination point and controls the drive of the electric motor based on the automatic control signal. According to this boat control system, the first controller can generate the automatic control signal, which simplifies the configuration of the boat control system.

The technology disclosed herein can be implemented in various forms, e.g., in the form of a boat control system, a boat equipped with a boat control system, or the like.

According to the technology disclosed herein, the configuration of the boat control system can be simplified.

### BRIEF DESCRIPTION OF THE DRAWINGS

FIG. 1 is a perspective view schematically illustrating a configuration of a boat.
FIG. 2 is a block diagram illustrating a configuration of a boat control system in a boat.
FIG. 3 is a side view illustrating a configuration of an electric propulsion device.
FIG. 4 is a top view illustrating a configuration of the electric propulsion device.
FIG. 5 is a schematic view illustrating a configuration of a drive unit.
FIG. 6 is a flowchart showing an operation of the boat control system in automatic steering.
FIG. 7 is an explanatory view illustrating an overview of automatic steering.

### DETAILED DESCRIPTION OF THE PREFERRED EMBODIMENTS

### EMBODIMENTS

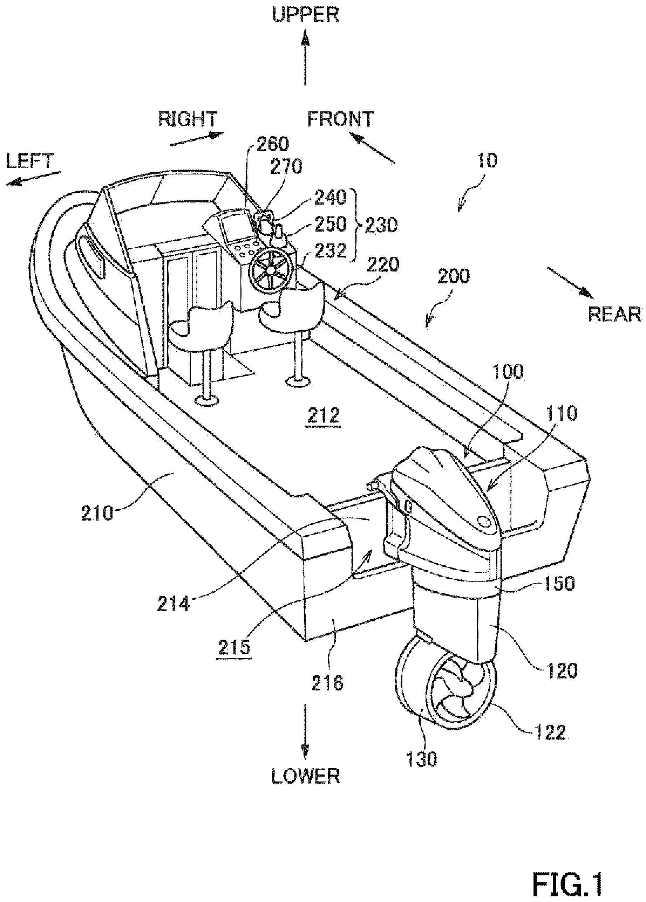

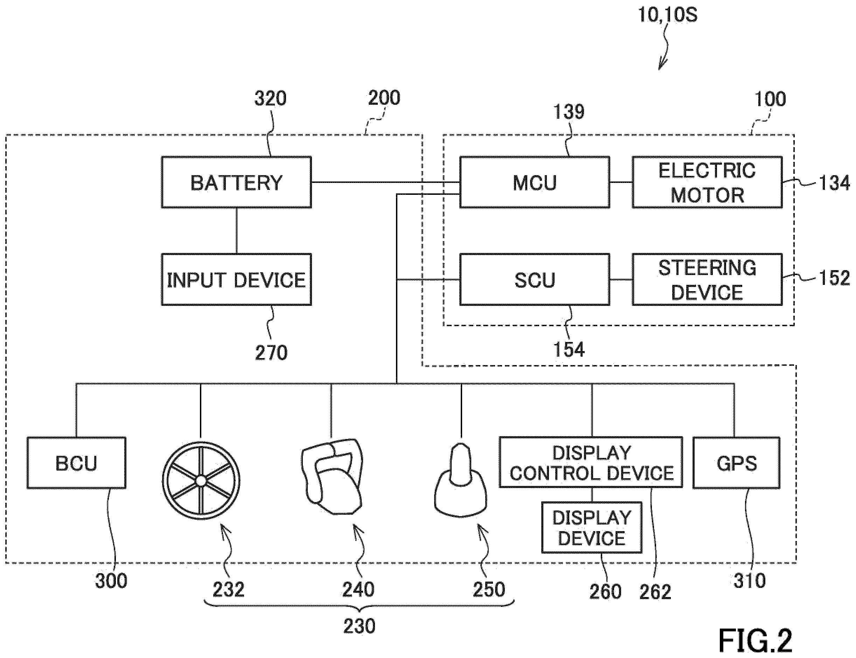

FIG. 1 is a perspective view schematically illustrating a configuration of a boat 10. FIG. 2 is a block diagram illustrating a configuration of a boat control system 10S in a boat 10. FIG. 1 and other some drawings described below show arrows representing each direction with respect to the position of the boat 10. More specifically, some figures show arrows representing front (FRONT), rear (REAR), left (LEFT), right (RIGHT), upper (UPPER), and lower (LOWER) directions, respectively. The front-rear direction, left-right direction, and upper-lower direction (vertical direction) are orthogonal to each other. Each component in the boat control system 10S is communicatively connected to each other by controller area network (CAN) communication.

The boat 10 includes a boat body 200 and an electric propulsion device 100. The electric propulsion device 100 is an example of the boat propulsion device.

The boat body 200 is a part of the boat 10 for the user (crew) to ride. The boat body 200 includes a boat main body 210, a pilot seat 220, an operation device 230, a display device 260, a display control device 262, an input device 270, a BCU 300, a GPS 310, and a battery 320. The BCU 300 is an example of the second controller.

The boat main body 210 includes a living space 212. The pilot seat 220 is installed in the living space 212. The boat body 200 further includes a partition wall 214 and a transom 216. The partition wall 214 divides the rear side of the living space 212. The transom 216 is disposed at the rear end of the boat body 200. In the front-rear direction, a space 215 exists between the transom 216 and the partition wall 214.

The operation device 230 is a device for steering the boat. The operation device 230 accepts operations from the user. The operation device 230 outputs operation signals in response to operations from the user. The operation device 230 is installed near the pilot seat 220. The operation device 230 includes a steering wheel 232, a shift/throttle lever 240, and a joystick unit 250.

The steering wheel 232 is used to steer the boat 10. The shift/throttle lever 240 is a device for performing a shifting operation and a propulsion force change operation of the boat 10. The joystick unit 250 is a device for performing a steering operation, a shifting operation and a propulsion force change operation of the boat 10.

The display device 260 is, e.g., a liquid crystal display and displays various images (e.g., operation images) related to the boat 10. The display control device 262 controls the display of the display device 260. The input device 270 is, e.g., a button for changing the steering mode and the like.

The boat control unit (BCU) 300 controls the overall operation of the boat 10 based on, e.g., signals transmitted from each component of the boat control system 10S. The BCU 300 includes, e.g., a CPU, a multi-core CPU, and programmable devices (field programmable gate array (FPGA), programmable logic device (PLD), and the like).

The Global Positioning System (GPS) 310 is a device that uses signals received from satellites to determine the current point of the boat 10. The battery 320 is an energy storage device. The battery 320 supplies power to the electric motor 134 (described below) and the input device 270.

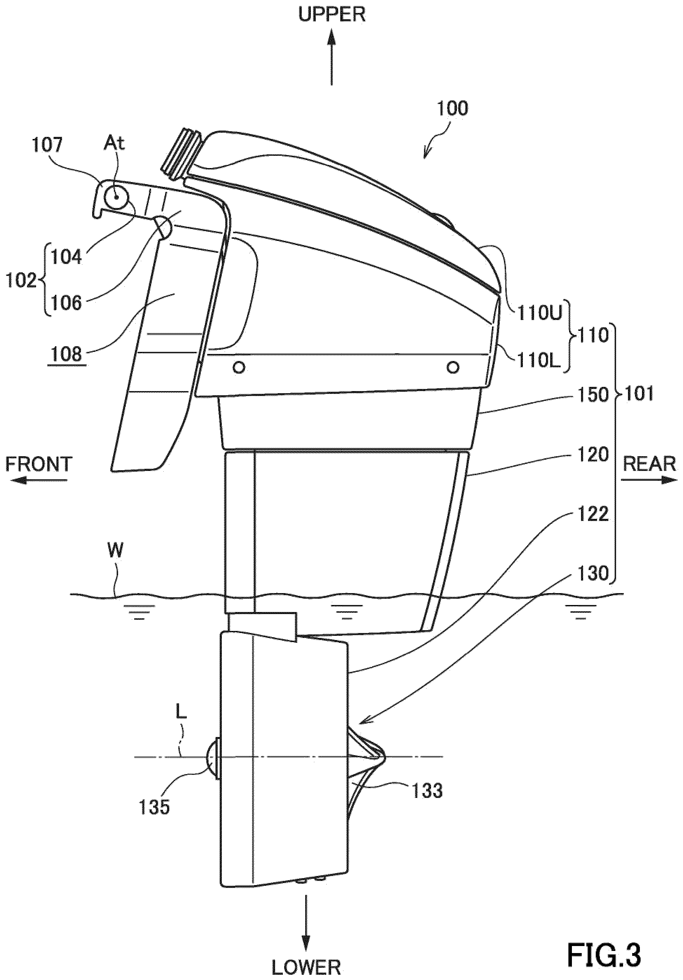

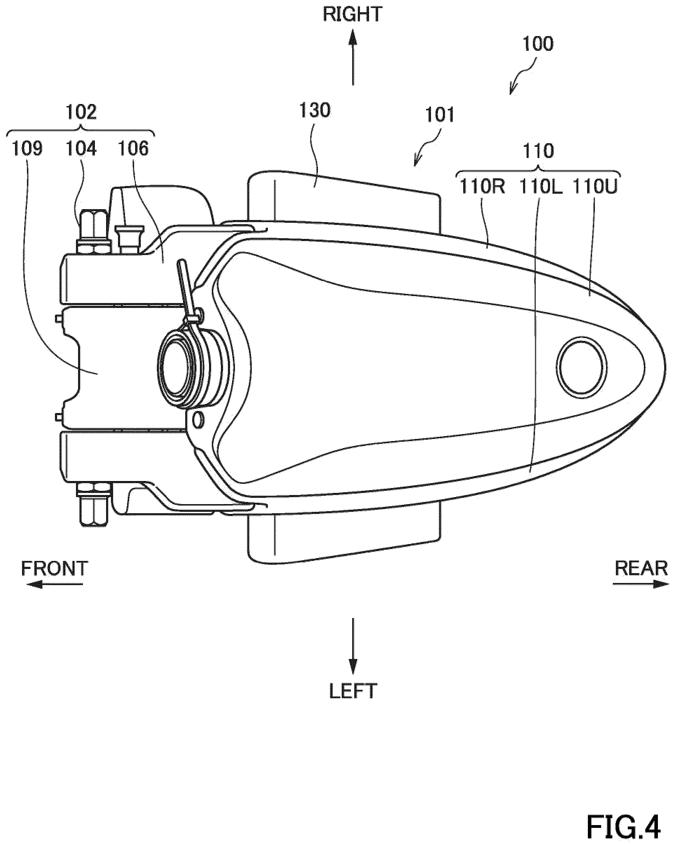

FIG. 3 is a side view schematically illustrating a configuration of an electric propulsion device 100. FIG. 4 is a top view illustrating a configuration of the electric propulsion device 100. The electric propulsion device 100 is a device that generates thrust to propel the boat 10. The electric propulsion device 100 is an electric propulsion device driven by an electric motor. The electric propulsion device 100 of this embodiment is an outboard motor. In the following, the electric propulsion device 100 in the reference attitude will be described unless otherwise specified. The reference attitude is the attitude of the electric propulsion device 100 when the boat 10 is running (the attitude shown in FIGS. 1 and 3), and is the attitude in which the propeller rotation shaft L of the propeller 132 (described below) extends in the front-rear direction. The front-rear direction, the left-right direction, and the upper-lower direction are defined based on the electric propulsion device 100 in the reference attitude.

The electric propulsion device 100 is attached to the transom 216 disposed at the rear (stern) of the boat body 200 (see FIG. 1). The electric propulsion device 100 has a propulsion device main body 101 and a suspension device 102.

The propulsion device main body 101 has a cowl 110, a middle housing 150, a lower housing 120, a steering device 152 (see FIG. 2), a duct 122, a drive unit 130, an MCU 139 (see FIG. 2), and an SCU 154 (see FIG. 2). The MCU 139 is an example of the first controller.

The cowl 110 is disposed at an upper portion of the electric propulsion device 100. The cowl 110 is a cover that accommodates various wirings and other components. The cowl 110 has an upper cover 110U, a left cover 110L, and a right cover 110R. The left cover 110L is disposed on the port side of the propulsion device main body 101. The right cover 110R is disposed on the starboard side of the propulsion device main body 101. The left cover 110L and the right cover 110R are positioned to face each other in the horizontal (left-right) direction. The upper cover 110U is disposed above the left cover 110L and the right cover 110R. The upper cover 110U covers the top of the left cover 110L and the top of the right cover 110R, respectively.

The middle housing 150 is disposed below the cowl 110 in the electric propulsion device 100. The middle housing 150 is a cover that accommodates the steering device 152, SCU 154, and various wirings.

The lower housing 120 is disposed below the middle housing 150 in the electric propulsion device 100. The lower housing 120 is a cover that accommodates, e.g., the MCU 139, various wirings. The lower housing 120 is rotatably attached to the middle housing 150 around an axis along the upper-lower direction.

The steering device 152 is a device that controls the steering angle of the boat 10. The steering device 152 is accommodated in the middle housing 150. The steering device 152 includes, e.g., an electric motor (not shown) and a steering shaft extending in the upper-lower direction (not shown). When the steering angle is changed by the steering device 152, e.g., the electric motor rotates the steering shaft. As the steering shaft rotates, the lower housing 120 connected to the steering shaft and the drive unit 130 connected to the lower housing 120 rotate around an axis along the upper-lower direction. This changes the steering angle of the boat 10.

The duct 122 is disposed below the lower housing 120 in the electric propulsion device 100. The duct 122 is a tubular body extending in the front-rear direction. The duct 122 is positioned lower than the water surface W in the reference attitude (see FIG. 3). The drive unit 130 is disposed radially inner side of the duct 122. In the radially inner side of the duct 122, a stator fin 133 and a bearing 135 are provided (see FIG. 3). The bearing 135 supports the propeller 132, described below, rotatably about the propeller rotation shaft L. The stator fin 133 has a plurality of fins (e.g., three fins). The plurality of fins are arranged radially around the bearing 135. The plurality of fins are equally spaced around the propeller rotation shaft L. The plurality of fins are fixed to the duct 122. The plurality of fins protrude rearwardly from the duct 122 behind the propeller 132 (see FIGS. 1 and 3).

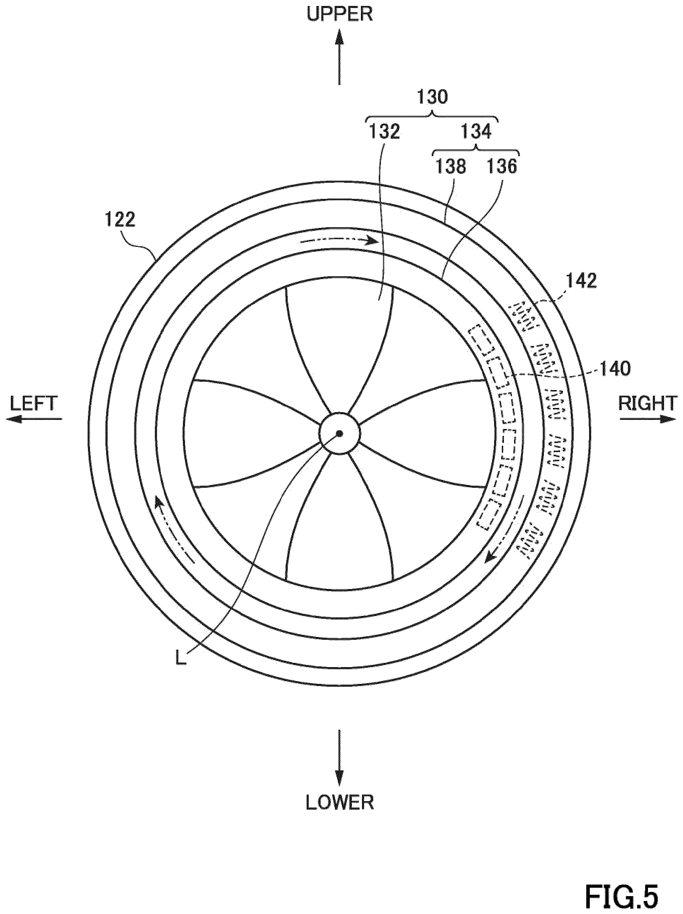

FIG. 5 is a schematic view illustrating a configuration of the drive unit 130. The drive unit 130 generates thrust to propel the boat 10. The drive unit 130 includes a propeller 132 and an electric motor 134.

The propeller 132 is a rotating body having a plurality of wings. The propeller 132 generates thrust by rotating. The propeller 132 is disposed radially inner side of the duct 122. The propeller 132 can rotate about the propeller rotation shaft L which is parallel to the horizontal direction. The propeller rotation shaft L is parallel to the central axis of the duct 122. The duct 122 covers the entire circumference of the propeller 132.

The electric motor 134 rotates the propeller 132. The electric motor 134 includes a rotor 136 and a stator 138.

The rotor 136 is a tubular body extending in the front-rear direction. The rotor 136 is rotatably supported with respect to the duct 122. The rotor 136 rotates about the propeller rotation shaft L with respect to the stator 138. The propeller 132 is disposed radially inner side of the rotor 136. The propeller 132 is fixed to the rotor 136. The propeller 132 rotates together with the rotor 136. The rotor 136 includes a plurality of permanent magnets 140. In FIG. 5, only one of the plurality of permanent magnets 140 is signed, and the signs of the other permanent magnets 140 are omitted. The plurality of permanent magnets 140 are arranged along the circumferential direction of the rotor 136.

The stator 138 is a tubular body extending in the front-rear direction. The stator 138 is disposed on the radially outer side of the rotor 136. The stator 138 is disposed on the same axis as the rotor 136. The stator 138 is fixed to the duct 122. The stator 138 includes a plurality of coils 142. In FIG. 5, only one of the plurality of coils 142 is signed, and the signs of the other coils 142 are omitted. The plurality of coils 142 are arranged along the circumferential direction of the stator 138.

When the plurality of coils 142 are energized, an electromagnetic force is generated to rotate the rotor 136. With this configuration, the propeller 132 generates forward propulsion force when the rotor 136 of the electric motor 134 rotates in the forward rotation direction and rearward propulsion force when the rotor 136 of the electric motor 134 rotates in the reverse rotation direction.

The motor control unit (MCU) 139 controls the drive of the electric motor 134. The MCU 139 includes, e.g., a CPU, a multi-core CPU, and a programmable device (field programmable gate array (FPGA), programmable logic device (PLD), and the like). The MCU 139 is accommodated in the lower housing 120.

The steering control unit (SCU) 154 controls the operation of the steering device 152. The SCU 154 includes, e.g., a CPU, a multi-core CPU, and a programmable device (field programmable gate array (FPGA), programmable logic device (PLD), and the like). The SCU 154 is accommodated in the middle housing 150.

The suspension device 102 is a device for suspending the propulsion device main body 101 on the boat body 200. The suspension device 102 has a tilt shaft 104, a pair of left and right clamp brackets 106, and a connection bracket 109.

The pair of left and right clamp brackets 106 are positioned behind the boat body 200, spaced apart from each other in the left-right direction. Each clamp bracket 106 is secured to the transom 216 of the boat body 200 by bolts, for example. Each clamp bracket 106 has a tubular support 107 with a through-hole extending in the left-right direction.

The tilt shaft 104 is a rod-shaped body. The tilt shaft 104 is rotatably supported in the through-hole of the support 107 of the clamp bracket 106. The centerline of the tilt shaft 104, the tilt axis At, is the axis in the horizontal direction (left-right direction) in the tilting action of the electric propulsion device 100.

The connection bracket 109 is positioned between a pair of the clamp brackets 106 in the left-right direction. The connection bracket 109 is rotatable around the tilt axis At and is supported by the support 107 of the clamp bracket 106 via the tilt shaft 104. The connection bracket 109 is driven to rotate about the tilt axis At with respect to the clamp bracket 106 by a tilt device (not shown) including an actuator such as a hydraulic cylinder, for example.

When the connection bracket 109 rotates around the tilt axis At with respect to the clamp bracket 106, the propulsion device main body 101 fixed to the connection bracket 109 also rotates around the tilt axis At. This achieves the tilting action of rotating the propulsion device main body 101 in the upper-lower direction with respect to the boat body 200. The tilting action of the electric propulsion device 100 changes the angle of the propulsion device main body 101 around the tilt axis At in the range from the tilt-down state (the state in which the electric propulsion device 100 is in the reference attitude: shown in FIG. 3), in which the propeller 132 is disposed underwater, to the tilt-up state, in which the propeller 132 is disposed above the water surface W. The tilting action of the electric propulsion device 100 also achieves a trimming action to adjust the angle around the tilt axis At of the propulsion device main body 101 to adjust the attitude of the boat 10 during traveling.

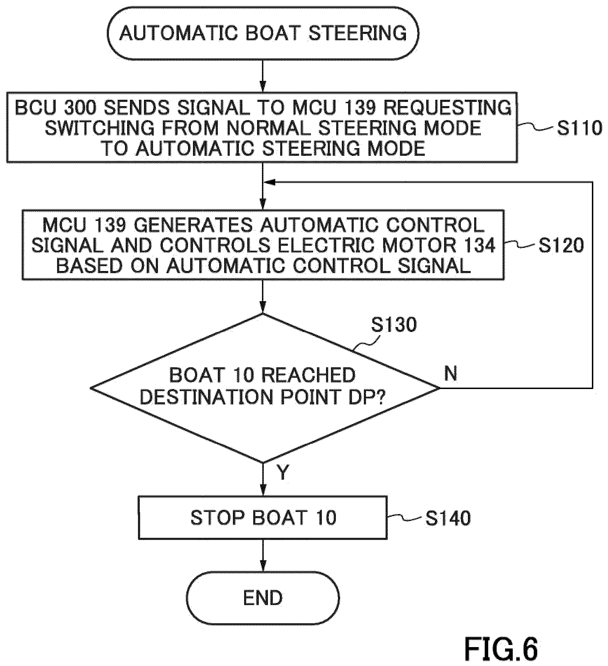

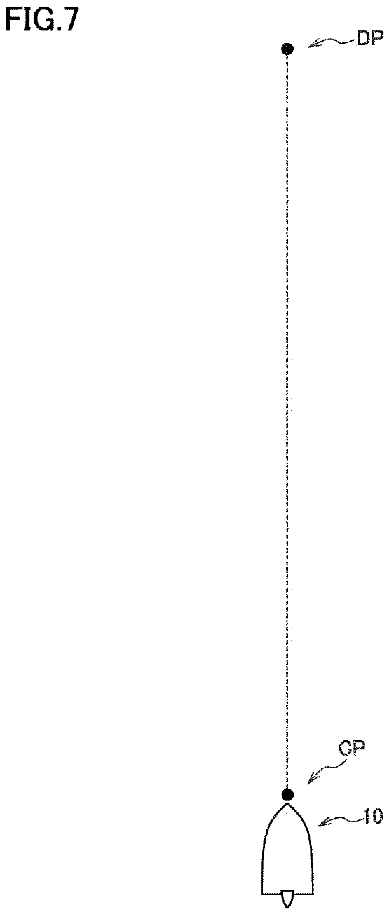

Details of the operation of the boat control system 10S of this embodiment will now be described. FIG. 6 is a flowchart showing an operation of the boat control system 10S in automatic steering. FIG. 7 is an explanatory view illustrating an overview of automatic steering. The boat 10 of this embodiment can switch the steering mode between normal steering and automatic steering. The normal steering is a steering mode in which the electric motor 134 and the steering device 152 are operated based on the operation signals output in response to operations performed on the operation device 230. The automatic steering is a steering mode in which the electric motor 134 and the steering device 152 are operated automatically by the MCU 139, BCU 300, or other devices, regardless of the operation signals. The following describes the operation of the boat control system 10S in automatic steering, particularly in deceleration control in which automatically directing the boat 10 to the destination point DP and braking the boat 10 to stop at the destination point DP (see FIG. 7).

First, the BCU 300 sends a signal to the MCU 139 requesting switching from the normal steering mode to the automatic steering mode (S110). The user operates the input device 270 to switch the MCU 139 from the normal steering mode to the automatic steering mode. By communicating with the input device 270, the BCU 300 recognizes that the switch to the automatic steering mode has been requested by the user. The BCU 300 then sends a signal to the MCU 139 requesting the switch from the normal steering mode to the automatic steering mode. In other words, the MCU 139 of this embodiment switches between the normal steering mode and the automatic steering mode. In the normal steering mode, the MCU 139 receives the operation signal output from the operation device 230 via the BCU 300 and controls the drive of the electric motor 134 based on the operation signal. In the automatic steering mode, the MCU 139 controls the drive of the electric motor 134 based on the automatic control signal that automatically directs the boat 10 to the destination point DP. The normal steering mode is an example of the first steering mode. The automatic steering mode is an example of the second steering mode.

Next, the MCU 139 generates an automatic control signal and controls the electric motor 134 based on the automatic control signal (S120). When the MCU 139 switches to the automatic steering mode, the MCU 139 receives information on the current point CP and destination point DP of the boat 10 from the GPS 310. The MCU 139 generates the automatic control signal based on the information of the current point CP and destination point DP of the boat 10.

The automatic control signal specifically includes a throttle request value and a shift request value. The throttle request value means the target value of the throttle in the electric motor 134. The throttle request value is determined, e.g., as follows. When the MCU 139 switches from the normal steering mode to the automatic steering mode, the MCU 139 sets the throttle request value to the smaller of the first value, which is the throttle request value immediately before the switch from the normal steering mode to the automatic steering mode, and the second value, which is the throttle request value predetermined for use in the automatic steering mode. The MCU 139 controls the rotation speed of the electric motor 134 based on the throttle request value determined as described above. The shift request value means the shift state required for the electric motor 134. The shift state is, e.g., one of forward, neutral, and backward. The MCU 139 controls the shifting of the electric motor 134 based on the shift request value determined based on the current point CP and the destination point DP of the boat 10. The MCU 139 controls the rotation speed and shift of the electric motor 134 as described above to drive the boat 10.

In automatic steering mode, the BCU 300 determines whether the boat 10 reaches the destination point DP based on the information of the current point CP received from the GPS 310 (S130). When the boat 10 reaches the destination point DP, the BCU 300 sends a deceleration/stop request to the MCU 139. The MCU 139 then receives the deceleration/stop request from the MCU 139 and stops the boat 10 (S140). Specifically, the MCU 139 sets the throttle request value to 0 (zero) when the boat 10 reaches the destination point DP. The MCU 139 sets the shift request value to neutral when the boat 10 reaches the destination point DP. As a result, the drive of the electric motor 134 stops and the boat 10 stops at the destination point DP. Until the boat 10 reaches the destination point DP, the MCU 139 continues to control the drive of the electric motor 134 based on the automatic control signal.

As explained above, the boat control system 10S of this embodiment controls the boat 10. The boat control system 10S includes the electric propulsion device 100 and the operation device 230. The electric propulsion device 100 includes the electric motor 134 and the MCU 139 that controls the drive of the electric motor 134. The operation device 230 accepts operations. The operation device 230 outputs an operation signal in response to the operation. The MCU 139 switches between the normal steering mode in which the MCU 139 controls the drive of the electric motor 134 based on the operation signal and the automatic steering mode in which the MCU 139 controls the drive of the electric motor 134 based on the automatic control signal to automatically direct the boat 10 to the destination point DP. The boat control system 10S of this embodiment can change whether the electric motor is controlled by the operation signal or the automatic control signal by switching the mode of the MCU 139, which simplifies the configuration of the boat control system 10S.

In the boat control system 10S of this embodiment, the MCU 139 receives information on the current point CP and destination point DP of the boat 10 and generates the automatic control signal. According the boat control system 10S of this embodiment, the MCU 139 can generate the automatic control signal, which simplifies the configuration of the boat control system 10S.

In the boat control system 10S of this embodiment, the automatic control signal includes a throttle request value, and the MCU 139 controls the rotation speed of the electric motor 134 based on the throttle request value. According to the boat control system 10S of this embodiment, the MCU 139 can generate the automatic control signal, which simplifies the configuration of the boat control system 10S.

In the boat control system 10S of this embodiment, when the MCU 139 switches from the normal steering mode to the automatic steering mode, the MCU 139 may set the throttle request value to the smaller of the first value, which is the throttle request value immediately before the switch from the normal steering mode to the automatic steering mode, and the second value, which is the throttle request value predetermined for use in the automatic steering mode. According to the boat control system 10S of this embodiment, the MCU 139 can generate the automatic control signal, which simplifies the configuration of the boat control system 10S.

In the boat control system 10S of this embodiment, the MCU 139 sets the throttle request value to 0 when the boat 10 reaches the destination point DP. According to the boat control system 10S of this embodiment, the MCU 139 can generate the automatic control signal, which simplifies the configuration of the boat control system 10S.

In the boat control system 10S of this embodiment, the automatic control signal includes a shift request value, and the MCU 139 controls the shift of the electric motor 134 based on the shift request value. According to the boat control system 10S of this embodiment, the MCU 139 can generate the automatic control signal, which simplifies the configuration of the boat control system 10S.

In the boat control system 10S of this embodiment, the MCU 139 sets the shift request value to neutral when the boat 10 reaches the destination point DP. According to the boat control system 10S of this embodiment, the MCU 139 can generate the automatic control signal, which simplifies the configuration of the boat control system 10S.

In the boat control system 10S of this embodiment, the boat control system 10S further includes the BCU 300 that controls the overall operation in the boat 10, and the BCU 300 sends a signal to the MCU 139 requesting a switch from the normal steering mode to the automatic steering mode. This boat control system 10S of this embodiment can change whether the electric motor is controlled by the operation signal or the automatic control signal by switching the mode of the MCU 139, which simplifies the configuration of the boat control system 10S.

In the boat control system 10S of this embodiment, in the normal steering mode, the MCU 139 receives operation signals output from the operation device 230 via the BCU 300. The boat control system 10S of this embodiment can change whether the electric motor is controlled by the operation signal or the automatic control signal by switching the mode of the MCU 139, which simplifies the configuration of the boat control system 10S.

In the boat control system 10S of this embodiment, the MCU 139 and the BCU 300 are connected to each other by CAN communication. The boat control system 10S of this embodiment can change whether the electric motor is controlled by the operation signal or the automatic control signal by switching the mode of the MCU 139, which simplifies the configuration of the boat control system 10S.

The boat 10 of this embodiment includes the boat body 200 and the boat control system 10S. The boat 10 of this embodiment can change whether the electric motor is controlled by the operation signal or the automatic control signal by switching the mode of the MCU 139, which simplifies the configuration of the boat control system 10S of the boat 10.

The boat control system 10S of this embodiment controls the boat 10. The boat control system 10S includes the electric propulsion device 100. The electric propulsion device 100 includes the electric motor 134 and the MCU 139 that controls the drive of the electric motor 134. The MCU 139 generates an automatic control signal to automatically direct the boat 10 to the destination point DP and controls the drive of the electric motor 134 based on the automatic control signal. According to the boat control system 10S of this embodiment, the MCU 139 can generate the automatic control signals, which simplifies the configuration of the boat control system 10S.

### MODIFICATIONS

The technology disclosed herein is explained with regards to the embodiments described above.

The configuration of the boat 10, the boat control system 10S, and the electric propulsion device 100 in the above embodiment is an example. In particular, in the above embodiment, the boat propulsion device is exemplified by the electric propulsion device 100 that is an outboard motor. Alternatively, the boat propulsion device may be, e.g., an inboard motor, an inboard/outboard motor, or a jet propeller.

In the above embodiment, the electric propulsion device 100 has only an electric motor as a drive source. Alternatively, the boat propulsion device may be a hybrid type having an engine in addition to the electric motor.

In the above embodiment, the operation device 230 has a shift/throttle lever 240 and a joystick unit 250. Alternatively, the operation device need only have either a shift/throttle lever or a joystick unit. According to a further alternative configuration, the operation device does not necessarily have to be a shift/throttle lever or a joystick unit.

## Claims

1. A boat control system (10S) that is configured for controlling a boat (10), comprising: a boat propulsion device (100) having an electric motor (134) and a first controller (139) that is configured for controlling a drive of the electric motor (134) based on an automatic control signal that automatically directs the boat (10) to a destination point.

2. The boat control system (10S) according to claim 1, wherein the first controller (139) is configured for generating the automatic control signal.

3. The boat control system (10S) according to claim 1 or 2, further comprising:
an operation device (230) that is configured for accepting operations and is configured for outputting operation signals in response to the operations, wherein the first controller (139) is configured for switching between
a first steering mode in which the first controller (139) controls the drive of the electric motor (134) based on the operation signal, and
a second steering mode in which the first controller (139) controls the drive of the electric motor (134) based on the automatic control signal.

4. The boat control system (10S) according to any one of claims 1 to 3, wherein the first controller (139) is configured for receiving information on a current point of the boat (10) and the destination point of the boat (10).

5. The boat control system (10S) according to any one of claims 1 to 4, wherein the automatic control signal includes a throttle request value as a target value of a throttle in the electric motor (134), and
the first controller (139) is configured for controlling a rotation speed of the electric motor (134) based on the throttle request value.

6. The boat control system (10S) according to claim 5, wherein when the first controller (139) switches from the first steering mode to the second steering mode, the first controller (139) is configured for setting the throttle request value to a smaller of a first value, which is the throttle request value immediately before the switch from the first steering mode to the second steering mode, and a second value, which is the throttle request value predetermined for use in the second steering mode.

7. The boat control system (10S) according to claim 5 or 6, wherein the first controller (139) is configured for setting the throttle request value to 0 when the boat (10) reaches the destination point.

8. The boat control system (10S) according to any one of claims 1 to 7, wherein the automatic control signal includes a shift request value according to a shift state required for the electric motor (134), and
the first controller (139) is configured for controlling a shift of the electric motor (134) based on the shift request value.

9. The boat control system (10S) according to claim 8, wherein the first controller (139) is configured for setting the shift request value to neutral when the boat (10) reaches the destination point.

10. The boat control system (10S) according to any one of claims 1 to 9, further comprising
a second controller (300) that is configured for controlling an overall operation of the boat (10), wherein
the second controller (300) is configured for sending a signal to the first controller (139) requesting switching from the first steering mode to the second steering mode.

11. The boat control system (10S) according to claim 10, wherein in the first steering mode, the first controller (139) is configured for receiving the operation signal output from the operation device (230) via the second controller (300).

12. The boat control system (10S) according to claim 10 or 11, wherein the first controller (139) and the second controller (300) are connected to each other by CAN communication.

13. A boat (10), comprising:
a boat body (200); and
the boat control system (10S) according to any one of claims 1 to 12.

14. A boat control method for controlling a boat (10) having a boat propulsion device (100) with an electric motor (134), the method comprises
controlling a drive of the electric motor (134) based on an automatic control signal that automatically directs the boat (10) to a destination point.
